# EUROPÄISCHE PATENTANMELDUNG

(11) **EP 0 785 047 A1**
(43) Veröffentlichungstag der Anmeldung: **23.07.1997**
(21) Anmeldenummer: 96119248.1
(22) Anmeldetag: 30.11.1996
(51) Int. Cl.: B23P 19/04, F01L 3/10

(54) **Verfahren und Vorrichtung zum Setzen bzw. Entnehmen von Ventilkeilen**

(30) Priorität: 19.01.1996 DE 19601853
(71) Anmelder: Weitner, Werner, D-85072 Eichstätt (DE)
(72) Erfinder: Weitner, Werner, D-85072 Eichstätt (DE)
(74) Vertreter: Sasse, Volker, Dipl.-Ing.

(57) **Zusammenfassung**

Eine Vorrichtung (1) zum Setzen bzw. Entnehmen von Ventilkeilen besteht aus einem Schaft (2), in dem eine Hülse (3) federnd gehalten ist. Die Hülse (3) besitzt an ihrem freien Ende (19) keilförmige Spaltwerkzeuge (20) zum Lösen der Ventilkeile und zum Halten innerhalb eines Raumes (12) des Schaftes (2). Ein Stift (4) ist innerhalb der Hülse (3) federnd gehalten und sorgt für eine Zentrierung der Ventilkeile beim Setzen bzw. Entnehmen.

## Beschreibung

Die Erfindung betrifft ein Verfahren und eine Vorrichtung zum Setzen bzw. Entnehmen von Ventilkeilen zur Festlegung eines Federtellers an einem Ventilstößel.

Aus der DE 29 09 984 C2 ist eine Vorrichtung bekannt, die von einem mit einer axialen Sackbohrung versehenen Schaft und einem darin axial verschiebbar und federnd gehaltenen Druckbolzen gebildet ist. Innerhalb des Druckbolzens ist ein Zentrierstift axial verschiebbar und federnd gehalten. Diese bekannte Vorrichtung weist jedoch den Nachteil auf, daß die Ventilkeile in den Federteller eingelegt werden müssen, bevor sie mit der Vorrichtung montiert werden können. Dieses Einsetzen der Ventilkeile ist jedoch eine mühsame Arbeit, wobei insbesondere die Gefahr besteht, daß sie durch eine unachtsame Bewegung verlorengehen. Außerdem ist diese bekannte Vorrichtung nicht in der Lage, die Ventilkeile wieder zu entnehmen. Damit ist sie für den Bedarf in Werkstätten, wo die Ventilkeile zum Wechseln des Ventils oder der Ventilfeder zunächst entfernt und nach erfolgter Reparatur wieder montiert werden müssen, ungeeignet.

Aus der DE 94 16 658.7 U1 ist eine Vorrichtung zur Entnahme von Ventilkeilen bekannt. Sie besteht aus einer Hülse, die unterseitig mit einer elastischen Greiferscheibe abgedeckt ist. Mit dieser bekannten Vorrichtung kann der Federteller des Ventils zurückgedrückt werden, wobei die Ventilkeile in den Raum innerhalb der Hülse fallen und von dort entnommen werden können. Diese bekannte Vorrichtung weist jedoch den Nachteil auf, daß mit ihr die Ventilkeile nicht gesetzt werden können. Außerdem können die Ventilkeile nicht entnommen werden, wenn sie an Ventilstößel bzw. an dessen Nut haften. In diesem Fall besteht darüber hinaus die Gefahr, daß die Vorrichtung nur unter Einwirkung zerstörerischer Kräfte vom Ventilstößel abnehmbar ist.

Der Erfindung liegt die Aufgabe zugrunde, eine Vorrichtung und ein Verfahren der eingangs genannten Art zu schaffen, die ein Entnehmen und Setzen von Ventilkeilen gestattet. Die Vorrichtung soll einfach zu bedienen sein und die entnommenen Ventilkeile bis zu ihrer Wiederverwendung in sich halten.

Diese Aufgabe wird erfindungsgemäß mit den Verfahrensschritten gemäß den Ansprüchen 1 und 2 sowie mit den Merkmalen des Anspruchs 5 gelöst.

Das Verfahren zum Setzen von Ventilkeilen gemäß Anspruch 1 ist sehr einfach und gleichzeitig sicher durchzuführen. Die zu setzenden Ventilkeile werden zwischen Spaltwerkzeugen einer Vorrichtung eingelegt und in ihr gehalten. Somit entfällt ein umständliches und gleichzeitig zeitraubendes Einlegen der Ventilkeile in den Federteller mittels einer Pinzette. Dies ist insbesondere bei modernen Verbrennungsmotoren von Bedeutung, die mit immer mehr Ventilen pro Zylinder ausgestattet werden, da hier der Raum zum Setzen der Ventilkeile zunehmend enger wird. Das Einlegen der Ventilkeile in die Vorrichtung gestaltet sich besonders einfach, wenn sie zuvor mit der gleichen Vorrichtung entnommen wurden. Dies wird in der gängigen Werkstattpraxis der Regelfall sein, da eine anfallende Reparatur eines Ventils den Austausch des Ventils oder der Ventilfeder betrifft, wobei die Ventilkeile wiederverwendet werden können. Der Federteller wird mittels der Vorrichtung unter Kompression der Ventilfeder bis unter die Nut des Ventilstößels gedrückt, so daß die Ventilkeile aus ihrem Klemmsitz zwischen der Ventilstößelnut und dem Federteller befreit werden. Hierzu ist es zweckmäßig, den Ventilstößel in seiner Lage zu arretieren, damit er nicht zusammen mit dem Federteller bewegt wird. Dazu könnte der Innenraum des Zylinders mit komprimierter Luft gefüllt werden. Alternativ könnte das Ventil auch durch einen Anschlag festgehalten werden. Anschließend werden die die Ventilkeile haltenden Spaltwerkzeuge zurückgezogen, worauf diese frei bewegbar werden und in den vorgesehenen Spalt zwischen dem Ventilstößel und dem Federteller gleiten. Durch diese Maßnahmen ist ein exaktes Einjustieren der Ventilkeile überflüssig, was unter den beengten Platzverhältnissen eines Verbrennungsmotors, insbesondere mit Mehrventiltechnik, besonders schwierig wäre. Beim abschließenden Zurückziehen der Vorrichtung gleitet der Federteller samt den Ventilkeilen am Ventilstößel entlang, bis diese in die Nut des Ventilstößels eingreifen und sich auf diese Weise verkeilen.

Beim Verfahren zum Entnehmen von Ventilkeilen gemaß Anspruch 2 wird die Vorrichtung ebenfalls zunächst auf den Federteller aufgesetzt und bis unter die Nut des Ventilstößels gedrückt. Da der Ventilstößel beispielsweise durch einen Überdruck im Zylinderraum oder durch einen mechanischen Anschlag in seiner Lage gehalten ist, löst sich dabei der Federteller von den Ventilkeilen. Gleichzeitig mit dem Drücken der Vorrichtung dringen Spaltwerkzeuge in die Spalten zwischen den Ventilkeilen ein und treiben diese auseinander. Dadurch ist sichergestellt, daß sich die Spaltkeile selbst dann vom Ventilstößel lösen, wenn sie in der Ventilstößelnut festgebacken sind. Dies könnte beispielsweise dadurch verursacht werden, daß Öl in die Ventilstößelnut eindringt, das sich bei den hohen Betriebstemperaturen des Ventils, insbesondere im Auspuffbereich, verklumpt. Die Krafteinbringung durch die Spaltwerkzeuge sorgt auch unter derart ungünstigen Bedingungen für ein sicheres Entfernen der Ventilkeile aus der Ventilstößelnut. Anschließend werden die Ventilkeile innerhalb der Vorrichtung abgelegt und gehalten. Vorzugsweise dienen die Spaltwerkzeuge selbst zum Halten der Ventilkeile, so daß diese sehr leicht unter Anwendung des Verfahrens gemäß Anspruch 1 wieder eingesetzt werden können.

Gemäß Anspruch 3 ist es günstig, vor dem Aufsetzen der Vorrichtung einen Stift auf den Ventilstößel aufzusetzen. Dieser Stift hat vorzugsweise einen Durchmesser, der dem Durchmesser des Ventilstößels entspricht. Er verhindert sowohl beim Setzen wie auch Entnehmen der Ventilkeile, daß diese nach innen fallen und von den Spaltwerkzeugen nicht mehr ausreichend sicher gehalten werden können. Dies ist allerdings nur in jenen Fällen erforderlich, in denen die Spalten zwischen den Ventilkeilen relativ groß bemessen sind, so daß sich die Ventilkeile nicht gegenseitig hinreichend von der Achse des Ventilstößels auf Abstand halten. Der Stift wird vorzugsweise federnd auf den Ventilstößel aufgesetzt, damit er während dem Setzen oder Entnehmen der Ventilkeile jederzeit sicher auf dem Ventilstößel aufsitzt und die Ventilkeile in ihrer Lage sichert. Dadurch ist auch sichergestellt, daß der Stift erst nach dem Zurückziehen der Vorrichtung vom Federteller seinen Kontakt mit dem Ventilstößel verliert.

Im allgemeinen liegen die Ventilkeile in keiner definierten radialen Winkellage in der Ventilstößelnut. Daher müssen die Spaltwerkzeuge beim Entnehmen der Ventilkeile auf die Lage der Ventilkeile ausgerichtet werden. Dies könnte beispielsweise durch Drehen der Vorrichtung um ihre Längsachse geschehen. Einfacher ist es, wenn gemäß Anspruch 4 lediglich die Spaltwerkzeuge in eine in die Spalten zwischen den Ventilkeilen greifende Lage verdreht werden. Auf die Vorrichtung wirkt eine verhältnismäßig große Kraft, da diese zur Ventilfeder im Gleichgewicht stehen muß. Dem gegenüber wirkt auf die Spaltwerkzeuge eine verhältnismäßig geringere Kraft, so daß deren Verdrehen mit wesentlich geringerer Reibung und damit feinfühliger durchgeführt werden kann. Das Verdrehen ist daher ohne aufwendige Lagerung der Vorrichtung von Hand möglich, so daß die korrekte Lage der Spaltwerkzeuge einfach am Einrasten der Spaltwerkzeuge in die Spalten zwischen den Ventilkeilen ertastet werden kann.

Die Vorrichtung gemäß Anspruch 5 hat sich zur Durchführung dieses Verfahrens bewährt. Die Hülse dieser Vorrichtung weist keilförmige Spaltwerkzeuge auf, mit denen die Ventilkeile vom Schaft getrennt werden können. Die Ventilkeile werden nach ihrer Entnahme in einem Raum abgelegt, der im Schaft vorgesehen ist, und der sich zur Endfläche des Schaftes hin verjüngt. Da sich die Ventilkeile nach ihrer Entnahme jeweils zwischen den keilförmig ausgebildeten Spaltwerkzeugen befinden, werden sie durch die Spaltwerkzeuge radial nach außen gedrängt. Die Ventilkeile liegen dabei an einer Grenzfläche eines im Schaftes vorgesehenen zur Endfläche sich verjüngenden Raumes an. Durch diese besondere Form des Raumes, in dem die Ventilkeile abgelegt werden, wird verhindert, daß die Ventilkeile nach unten bis zur Öffnung des Raumes gleiten und auf diese Weise aus der Vorrichtung herausfallen können. Da die Hülse mit den daran vorgesehenen Spaltwerkzeugen im Schaft federnd gehalten ist, werden die Spaltwerkzeuge unter der Kraftwirkung der Feder in Richtung Endfläche der Vorrichtung belastet, so daß die Ventilkeile sicher im Raum des Schaftes gehalten sind. Die Hülse ist zwangsweise zurückziehbar ausgebildet, so daß die Arretierung der Ventilkeile innerhalb der Vorrichtung aufgehoben werden kann. Durch das Zurückziehen der Hülse und damit der Spaltwerkzeuge werden die Ventilkeile freigegeben, so daß sie entlang der Innenfläche des sich zur Endfläche des Schaftes verjüngenden Raumes gleiten. Zusätzlich werden die Ventilkeile innenseitig von einem Stift geführt, der mit dem Ventilstößel fluchtet und vorzugsweise den gleichen Durchmesser wie dieser aufweist. Damit sind die Ventilkeile beim Austreten aus dem Raum des Schaftes sowohl innen- als auch außenseitig in ihrer Lage korrekt gehalten und gelangen somit sicher in den vorgesehenen Ringspalt zwischen dem Ventilstößel und dem Federteller.

Eine Zurückziehbarkeit der Hülse in den Schaft könnte beispielsweise durch einen außen über die Hülse überstehenden Stift realisiert werden, der einen Schlitz des Schaftes durchdringt. Alternativ könnte eine Schiebekraft auch magnetisch übertragen werden. Am zweckmäßigsten ist es jedoch, wenn gemäß Anspruch 6 der Schaft mit einer axialen Durchgangsbohrung ausgestattet ist, die von der Hülse durchsetzt ist. Am Gegenende des Schaftes, das der Endfläche gegenüberliegt, ist eine Handhabe in Form eines Griffteils vorgesehen, mit dessen Hilfe die Hülse zurückziehbar ist. Hieraus ergibt sich ein besonders einfacher und damit übersichtlicher Aufbau der Vorrichtung, wobei sie sehr leicht zu bedienen ist.

Um die Spaltwerkzeuge in eine Lage verdrehen zu können, in der sie in die Spalten zwischen den Ventilkeilen greifen, ist die Hülse gemäß Anspruch 7 im Schaft drehbar gehalten. Insbesondere, wenn auch die Merkmale des Anspruchs 6 genutzt werden, ergibt sich eine besonders einfache Bedienung, da zum Drehen, wie auch zum Zurückziehen der Spaltwerkzeuge die gleiche Handhabe verwendet werden kann.

Gemäß Anspruch 8 ist es vorteilhaft, daß an der Hülse die keilförmigen Spaltwerkzeuge einstückig angeformt sind. Die Spaltwerkzeuge sind in diesem Fall sehr hoch belastbar, ohne daß die Gefahr des Abbrechens eines Spaltkeils besteht. Die Spaltkeile können daher sehr schlank ausgebildet sein, was ihre Spaltwirkung verbessert.

Gemäß Anspruch 9 ist es günstig, daß der in der Hülse gehaltene Stift mit einer Feder beaufschlagt ist. Der Stift wird dabei durch die Feder in eine über die Hülse überstehende Lage gedrückt. Dies stellt sicher, daß beim Aufsetzen der Vorrichtung auf den Federteller eines Ventils der zentrale Stift bereits am Ventilstößel anliegt und bis zum Abnehmen der Vorrichtung vom Federteller mit diesem in Kontakt bleibt. Der Stift bildet daher zusammen mit dem Ventilstößel eine Art Lagesicherung für die Ventilkeile. Dadurch wird verhindert, daß sich die Ventilkeile auf die Achse der Hülse zubewegen und dadurch von den Spaltwerkzeugen nicht mehr korrekt erfaßt und gehalten werden können.

Gemäß Anspruch 10 ist es günstig, den Raum zur Aufnahme der Ventilkeile kegelstumpfförmig auszubilden. Dies ergibt eine besonders günstige Anlage der außenseitig kegelförmigen Ventilkeile an der Schaftinnenwand, so daß diese sehr sicher innerhalb des Schaftes gehalten werden. Da der maximale Durchmesser dieses Raums größer als der der axialen Bohrung ist, ergibt sich eine Hinterschneidung, die verhindert, daß die Ventilkeile zum Gegenende des Schaftes hin bewegt werden und eine undefinierte Lage innerhalb des Schaftes einnehmen.

Gemäß Anspruch 11 ist es vorteilhaft, den Schaft in einer Durchgangsbohrung einer am Verbrennungsmotor arretierbaren Halterung zu führen. Dadurch ist gewährleistet, daß der Schaft unabhängig von der Kraftrichtung axial zum Ventilstößel bewegt wird. Der Schaft und der Stift bleiben daher stets aufdem Federteller bzw. dem Ventilstößel zentriert, so daß ein störungsfreies Setzen bzw. Entnehmen der Ventilkeile gewährleistet ist. Zusätzlich bietet die mit einer Durchgangsbohrung versehene Halterung den besonderen Vorteil, daß die Durchgangsbohrung in ihrer Lage und Richtung auf den jeweiligen Verbrennungsmotor exakt abgestimmt ist, so daß Justierungen der Halterung entfallen. Das Wechseln der Ventilkeile ist daher besonders einfach und damit rasch und kostengünstig durchführbar.

Schließlich ist es gemäß Anspruch 12 günstig, den Schaft mit einem Wiederlager für ein Werkzeug auszurüsten. Das Werkzeug greift dabei in ein Wiederlager ein, das an der Halterung vorgesehen ist. Damit kann die erforderliche Druckkraft auf den Schaft zur Überwindung der Kraft der Ventilfeder besonders leicht durch die Hebelwirkung des Werkzeugs aufgebracht werden. Das am Schaft vorgesehene Wiederlager könnte beispielsweise durch radial überstehende Bolzen oder durch am Gegenende des Schaftes vorgesehene Nuten realisiert werden.

Anhand der Zeichnung wird das erfindungsgemäße Verfahren sowie die erfindungsgemäße Vorrichtung beispielhaft erläutert, ohne den Schutzumfang zu beschränken.

Es zeigt:
- Figur 1: eine teilweise geschnittene Ansicht einer Vorrichtung zum Setzen und Entnehmen von Ventilkeilen,
- Figur 2: eine perspektivische Darstellung der Vorrichtung gemäß Figur 1 mit einer Halterung und einem Hebel,
- Figur 3: die Vorrichtung gemäß Figur 1 beim Aufsetzen aufeinen Federteller,
- Figur 4: die Vorrichtung gemäß Figur 3 beim Eindringen der Spaltwerkzeuge zwischen die Ventilkeile,
- Figur 5: die Vorrichtung gemäß Figur 3 nach dem Entnehmen der Ventilkeile und
- Figur 6: die Vorrichtung gemäß Figur 3 beim Abnehmen vom Federteller.

Eine Vorrichtung 1 zum Setzen bzw. Entnehmen von nicht dargestellten Ventilkeilen besteht im wesentlichen aus einem geschnitten dargestellten Schaft 2, einer darin axial verschiebbaren Hülse 3, in der ein Stift 4 gehalten ist. Der Schaft 2 besteht aus einem Kopfteil 5, der mittels eines Gewindes 6 mit einem Gehäuseteil 7 verbunden ist. Das Kopfteil 5 des Schaftes 2 besitzt an seinem freien Ende 8 eine Endfläche 9 zur Anlage gegen einen nicht dargestellten Federteller. In dieser Endfläche 9 ist eine Zentrierwulst 10 vorgesehen, die eine axiale Durchgangsbohrung 11 des Schaftes 2 umgibt. Diese Zentrierwulst 11 gestattet eine Selbstzentrierung der Vorrichtung 1 auf den Federteller. Im Kopfteil 5 des Schaftes 2 ist in geringem Abstand von seiner Endfläche 9 ein kegelstumpfförmig zum Gegenende 13 erweiternder Raum 12 vorgesehen, der zur Ablage der Ventilkeile dient. Dieser Raum 12 besitzt einen maximalen Durchmesser D₁, der größer ist als der Durchmesser D₂ der Durchgangsbohrung 11. Hieraus ergibt sich, daß der Raum 12 zum Gegenende 13 hin im Außenrandbereich von einer radialen Fläche 14 begrenzt ist. Diese Fläche 14 dient als Anschlagfläche für die Ventilkeile, so daß diese nicht über den Raum 12 hinaus tiefer in den Schaft 2 gelangen können.

Die im Schaft 2 gehaltene Hülse 3 ist in ihrer oberen Hälfte geschnitten und in ihrer unteren Hälfte in Ansicht dargestellt. Sie besitzt eine außenseitige Verstärkung 15, die einerseits als Anschlag gegen das Kopfteil 5 und andererseits als Widerlager für eine Druckfeder 16 dient. Die Druckfeder 16 ist im Schaft 2 an einem Widerlager 17 abgestützt und drückt die Hülse 3 in Richtung der Endfläche 9 des Schaftes 5 bis die Verstärkung 15 an einer Querschnittsreduktion 18 des Kopfteils 5 anliegt. An ihrem freien Ende 19 sind an der Hülse 3 keilförmige Spaltwerkzeuge 20 einstückig angeformt, die axial zum Schaft 2 ausgerichtet sind. Diese dienen zum Trennen der Ventilkeile vom Ventilstößel und zu ihrem Festhalten im Raum 12. Im Bereich des Gegenendes 13 durchdringt die Hülse 3 die axiale Durchgangsbohrung 11 des Schaftes 2. Um die Hülse 3 in den Schaft 2 zwangsweise zurückziehen und gleichzeitig drehen zu können, ist am Gegenende 13 eine Handhabe 21 in Form eines Griffteils in die Hülse 3 eingeschraubt. Ein Gewindebolzen 22 der Handhabe 21 dient gleichzeitig als Widerlager für eine in der Hülse 3 gehaltene Feder 23. Diese drückt den in der Hülse 3 axial verschiebbar gehaltenen Stift 4 in Richtung der Endfläche 9. Um den Verschiebeweg des Stiftes 4 zu begrenzen, besitzt dieser einen Absatz 24, der mit einem innenseitigen Anschlag 25 der Hülse 3 zusammenwirkt.

Am Gehäuseteil 7 des Schaftes 2 sind außenseitig überstehende Widerlager 26 in Form zweier radial ausgerichteter und zueinander fluchtender Bolzen vorgesehen. Diese Widerlager 26 dienen zum Angreifen eines Werkzeuges, mit Hilfe dessen die Vorrichtung 1 gegen die Kraft der Ventilfeder gedrückt wird.

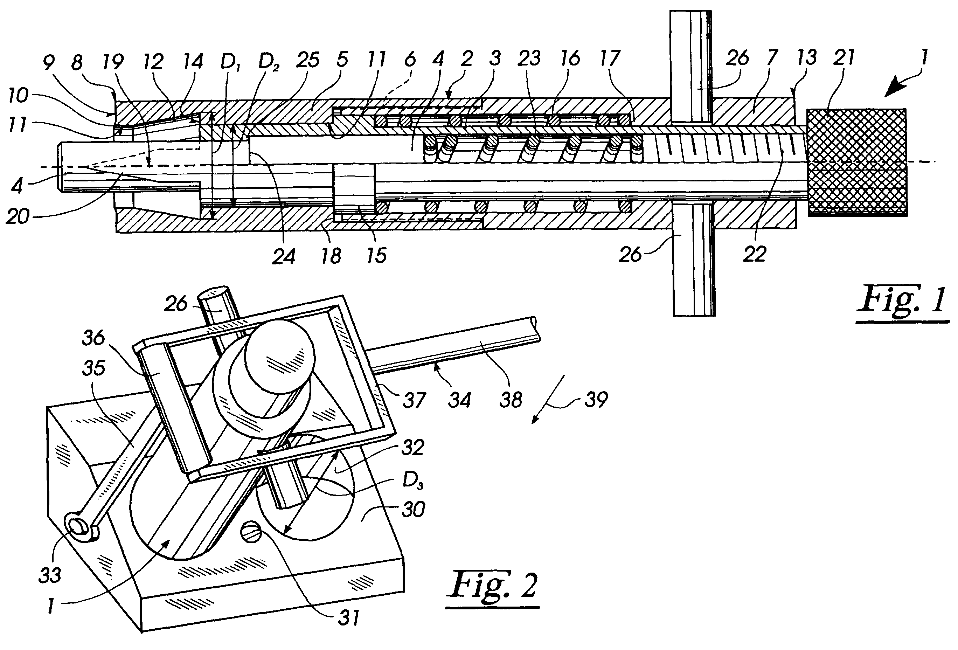

Figur 2 zeigt eine perspektivische Darstellung der Vorrichtung 1 gemäß Figur 1. Auf einem nicht dargestellten Motorblock ist eine Halterung 30 mittels Befestigungsschrauben 31 arretiert. Die Halterung 30 ist als blockartiger Körper ausgebildet und besitzt Durchgangsbohrungen 32, die in ihrer Lage und Richtung auf die Ventilstößel des darunterliegenden Motors ausgerichtet sind. Die Durchgangsbohrungen 32 besitzen Durchmesser D₃, die eine axiale Verschiebbarkeit und gleichzeitig eine Führung für die Vorrichtung 1 gewahrleisten. Die Anzahl der Durchgangsbohrungen 32 richtet sich lediglich nach praktischen Gesichtspunkten. So könnte beispielsweise nur eine einzelne Durchgangsbohrung vorgesehen sein, mit der ein einziges Ventil gewechselt werden kann. Alternativ ist es auch vorstellbar - wie dargestellt - mehrere Durchgangslöcher 32 vorzusehen, so daß auch ein schnelles Wechseln mehrerer Ventile durchgeführt werden kann.

An der Halterung 30 befindet sich ein Widerlager 33, an dem ein Werkzeug 34 zum Drücken der Vorrichtung 1 angreift. Dieses Werkzeug 34 besteht aus einem Steg 35, an dem über ein Drehgelenk 36 eine Gabel 37 angelenkt ist. Dem Drehgelenk 36 gegenüberliegend ist an der Gabel 37 ein Hebelarm 38 festgelegt, dessen nicht dargestelltes Gegenende mit einem Handgriff ausgerüstet ist. Durch Drücken des Hebelarms 38 in Richtung des Pfeiles 39 übt die Gabel 37 auf die Widerlager 26 der Vorrichtung 1 eine axial gerichtete Kraft aus, die die Vorrichtung 1 gegen den Federteller drückt. Durch den langen Hebelarm 38 wird eine Kraftübersetzung realisiert, so daß zum Drücken der Ventilfeder ein verhältnismäßig geringer Kraftaufwand aufgebracht werden muß.

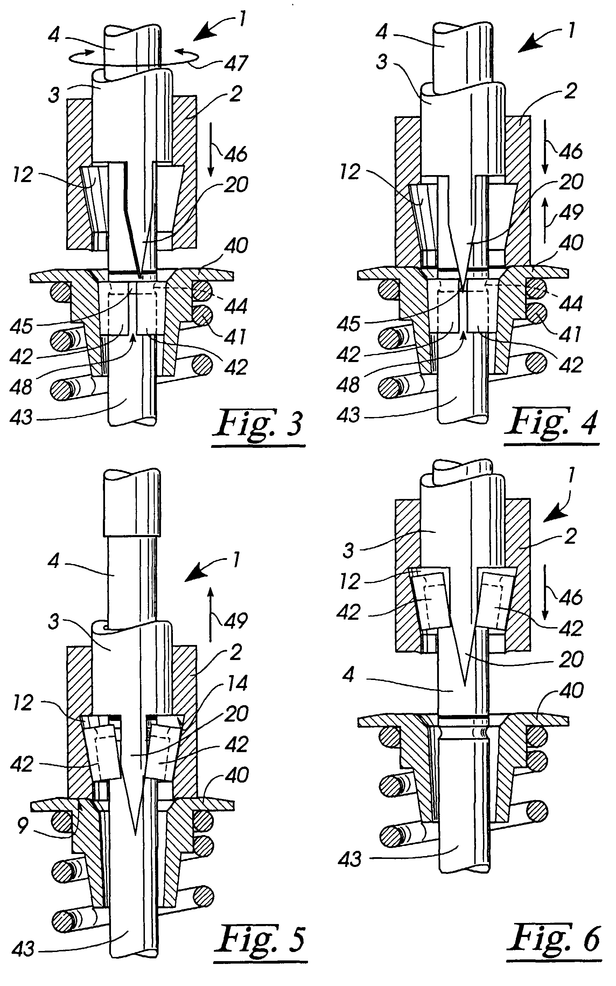

Das erfindungsgemäße Verfahren zum Setzen der Ventilkeile wird anhand der Figuren 3 bis 6 näher erläutert. Figur 3 zeigt die Vorrichtung 1 mit ihrem Schaft 2, ihrer Hülse 3 mit den Spaltwerkzeugen 20 und dem Stift 4 beim Aufsetzen auf einen Federteller 40, der durch eine Ventilfeder 41 belastet ist. Der Federteller 40 ist mittels zweier Ventilkeile 42 an einem Ventilstößel 43 festgelegt. Dazu besitzen die Ventilkeile 42 außenseitig eine an den Federteller 40 angepaßte Kegelform und innenseitig eine Wulst 44, die in eine radiale Nut 45 des Ventilstößels 43 eindringt.

Beim Aufsetzen der Vorrichtung 1 auf den Federteller 40 gelangt zunächst der Stift 4 mit dem Ventilstößel 43 zur Anlage, da dieser über den Schaft 2 übersteht. Die Vorrichtung 1 wird zunächst in Richtung des Pfeiles 46 gegen den Federteller 40 gedrückt, wobei der federnd gehaltene Stift 4 in die Hülse 3 zurückgedruckt wird. Durch das Drücken der Vorrichtung 1 in Richtung des Pfeiles 46 gelangen die keilförmigen Spaltwerkzeuge 20 in Anlage mit den Ventilkeilen 42 und werden bei weiterem Verschieben des Schaftes 2 ebenfalls in diesen zurückgedrückt. Anschließend wird die Hülse 3 an ihrer Handhabe 21 in Richtung des Pfeiles 47 verdreht, bis die Spaltwerkzeuge 20 in Spalten 48 zwischen den Ventilkeilen 42 eingreifen. Die bedienende Person kann dies sehr leicht durch ein deutlich spürbares Einrasten der Hülse 3 feststellen, da der Drehwiderstand der Hülse 3 dann deutlich erhöht ist.

Nach dem Einrasten der Spaltwerkzeuge 20 in die Spalten 48 befindet sich die Vorrichtung 1 in der in Figur 4 dargestellten Lage. Nun wird der Schaft 2 weiter in Richtung des Pfeiles 46 gedrückt, so daß der Federteller 40 gegen die Kraft der Ventilfeder 41 in Richtung des Pfeiles 46 verschoben wird. Dabei dringen die Spaltwerkzeuge 20 tiefer in die Spalten 48 zwischen den Ventilkeilen 42 ein und drücken diese auseinander. Dabei werden sie vom Ventilstößel 43 gelöst und frei bewegbar. Sollten die Ventilkeile 42 sehr fest in der Nut 45 des Ventilstößels 43 kleben, so kann unter Umstanden die Kraft der Feder 16 auf die Hülse 3 nicht ausreichen, um die Ventilkeile 42 zu trennen. In diesem Fall kann aber durch Drücken auf die Handhabe 21 der Hülse 3 die Spaltkraft des Spaltwerkzeuges 20 vergrößert werden, so daß die Ventilkeile 42 sicher vom Ventilstößel 43 getrennt werden.

Nachdem der Schaft 2 bis unter die Ventilstößelnut 45 gedrückt wurde, sind die Ventilkeile 42 frei und gelangen - wie in Figur 5 dargestellt - in den Raum 12 des Schaftes 2. Der Raum 12 ist konisch zur Endfläche 9 des Schaftes 2 hin verjüngend ausgebildet. Dadurch ist gewährleistet, daß bei der in Figur 5 dargestellten Lage der Hülse 3 die Ventilkeile 42 von den Spaltwerkzeugen 20 radial nach außen gedrückt werden, so daß sie im Raum 12 sicher gehalten sind. Die Haltesicherheit der Ventilkeile 42 wird durch den Stift 4 weiter erhöht, der ein nach Innenfallen der Ventilkeile 42 verhindert. Anschließend kann der Schaft 1 unter Entspannung der Ventilfeder 41 in Richtung des Pfeiles 49 verschoben und vom Federteller 40 abgenommen werden, so daß er die in Figur 6 dargestellte Endlage erreicht. Die Ventilkeile 42 werden dann zusammen mit der Vorrichtung 1 entnommen, so daß die erforderlichen Reparaturen am Ventil durchgeführt werden können.

Um die Ventilkeile 42 nach erfolgter Reparatur wieder zwischen den Ventilstößel 43 und den Federteller 40 zu setzen, wird die Vorrichtung 1 gemäß Figur 6 mit eingelegten Ventilkeilen 42 wieder auf den Federteller 40 aufgesetzt und in Richtung des Pfeiles 46 gedrückt, bis sie die in Figur 5 dargestellte Lage erreicht. Anschließend wird die Hülse 3 durch Ziehen an ihrer Handhabe 21 in Richtung des Pfeiles 49 zurückgezogen, so daß die Ventilkeile 42 im Raum 12 frei bewegbar werden. Die Ventilkeile 42 sind innenseitig durch den Stift 4, dessen Durchmesser dem Durchmesser des Ventilstößels 43 entspricht, und außenseitig durch die Konizität des Raumes 12 geführt. Hierdurch ist sichergestellt, daß die Ventilkeile 42 in ihre vorbestimmte Lage zwischen den Federteller 40 und dem Ventilstößel 43 gleiten. Anschließend wird der Schaft 2 in Richtung des Pfeiles 49 unter teilweiser Entspannung der Ventilfeder 41 verschoben, wobei die Ventilkeile 42 entlang des Ventilstößels gleiten.

Sobald - wie in Figur 4 dargestellt - die Wülste 44 der Ventilkeile 42 mit der radialen Nut 45 des Ventilstößels 43 fluchten, verkeilen sich die Ventilkeile 42 zwischen dem Ventilstößel 43 und dem Federteller 40. Dadurch wird der Federteller 40 am Federstößel 43 festgelegt, so daß bei weiterer Verschiebung des Schaftes 2 in Richtung des Pfeiles 49 der Federteller 40 in seiner Lage verbleibt und die Vorrichtung 1 abgenommen werden kann.

### Bezugszeichenliste

- 1: Vorrichtung
- 2: Schaft
- 3: Hülse
- 4: Stift
- 5: Kopfteil
- 6: Gewinde
- 7: Gehäuseteil
- 8: freies Ende
- 9: Endfläche
- 10: Zentrierwulst
- 11: Durchgangsbohrung
- 12: Raum
- 13: Gegenende
- 14: Fläche
- 15: Verstärkung
- 16: Druckfeder
- 17: Widerlager
- 18: Querschnittreduktion
- 19: freies Ende
- 20: Spaltwerkzeug
- 21: Handhabe
- 22: Gewindebolzen
- 23: Feder
- 24: Absatz
- 25: Anschlag
- 26: Widerlager
- 30: Halterung
- 31: Befestigungsschraube
- 32: Durchgangsbohrung
- 33: Widerlager
- 34: Werkzeug
- 35: Steg
- 36: Drehgelenk
- 37: Gabel
- 38: Hebelarm
- 39: Pfeil
- 40: Federteller
- 41: Ventilfeder
- 42: Ventilkeil
- 43: Ventilstößel
- 44: Wulst
- 45: Nut
- 46, 47: Pfeil
- 48: Spalt
- 49: Pfeil
- D₁: Durchmesser des Raumes
- D₂, D₃: Durchmesser der Durchgangsbohrung

## Patentansprüche

1. Verfahren zum Setzen von Ventilkeilen (42) an einem mit einer Nut (45) versehenen Ventilstößel (43), zur Festlegung eines durch eine Ventilfeder (41) belasteten Federtellers (40), bei dem die Ventilkeile (42) zwischen Spaltwerkzeugen (20) einer Vorrichtung (1) eingelegt und in ihr gehalten werden, diese auf dem Federteller (40) stirnseitig aufgesetzt und gegen die Federkraft bis unter die Nut (45) des Federstößels (43) gedrückt wird, wodurch die Ventilkeile (42) durch Zurückziehen der Spaltwerkzeuge (20) freigegeben werden, zwischen Ventilstößel (43) und Federteller (40) gleiten und sich dort beim Zurückziehen der Vorrichtung (1) verkeilen.

2. Verfahren zum Entnehmen von Ventilkeilen (42) von einem mit einer Nut (45) versehenen Ventilstößel (43), die einen Federteller (40) daran festlegen, bei dem eine Vorrichtung (1) auf dem Federteller (40) stirnseitig aufgesetzt und gegen die Federkraft bis unter die Nut (45) des Ventilstößels (43) gedrückt wird, wobei gleichzeitig Spaltwerkzeuge (20) zwischen die Ventilkeile (42) eindringen, diese vom Ventilstößel (43) lösen und anschließend innerhalb der Vorrichtung 1 halten.

3. Verfahren nach Anspruch 1 oder 2, bei dem vor dem Aufsetzen der Vorrichtung (1) ein Stift (4) auf dem Ventilstößel (43) zentral aufgesetzt wird, der bis zum Zurückziehen der Vorrichtung (1) am Ventilstößel (43) anliegt.

4. Verfahren nach Anspruch 2, bei dem vor dem Drücken der Vorrichtung (1) die Spaltwerkzeuge (20) in eine in die Spalten (48) zwischen den Ventilkeilen (42) greifende Lage verdreht werden.

5. Vorrichtung zum Setzen und/oder Entnehmen von Ventilkeilen (42), die einen Federteller (40) an einem Ventilstößel (43), vorzugsweise eines Verbrennungsmotorventils, festlegen, bestehend aus einem mit einer axialen Bohrung versehenen Schaft (2) und einer daran verschiebbar und federnd gehaltenen Hülse (3), innerhalb der ein Stift (4) axial verschiebbar gelagert ist, **dadurch gekennzeichnet**, daß die Hülse (3) zwangsweise in den Schaft (2) zurückziehbar ausgebildet ist, an ihrem freien Ende (8) axial ausgerichtete, keilförmige Spaltwerkzeuge (20) aufweist, und der Schaft (2) zur Aufnahme der Ventilkeile (42) einen zu seiner Endfläche (9) sich verjüngenden Raum (12) aufweist.

6. Vorrichtung nach Anspruch 5, **dadurch gekennzeichnet**, daß die axiale Bohrung des Schaftes (2) als von der Hülse (3) durchsetzte Durchgangsbohrung (11) ausgebildet ist, und die Hülse (3) an ihrem Gegenende (13) eine über den Schaft (2) überstehende Handhabe (21) aufweist.

7. Vorrichtung nach Anspruch 5 oder 6, **dadurch gekennzeichnet**, daß die Hülse (3) im Schaft (2) drehbar gehalten ist.

8. Vorrichtung nach mindestens einem der Ansprüche 5 bis 7, **dadurch gekennzeichnet**, daß an der Hülse (3) die keilförmigen Spaltwerkzeuge (20) einstückig angeformt sind.

9. Vorrichtung nach mindestens einem der Ansprüche 5 bis 8, **dadurch gekennzeichnet**, daß der in der Hülse (3) gehaltene Stift (4) mittels einer Feder (23) in eine Lage gedrückt ist, in der er über die Hülse (3) übersteht.

10. Vorrichtung nach mindestens einem der Ansprüche 5 bis 7, **dadurch gekennzeichnet**, daß der zur Aufnahme der Ventilkeile (42) dienende Raum (12) des Schaftes (2) kegelstumpfförmig ausgebildet ist, dessen maximaler Durchmesser (D₁) größer als der der axialen Bohrung ist.

11. Vorrichtung nach mindestens einem der Ansprüche 5 bis 7 und 10, **dadurch gekennzeichnet**, daß der Schaft (2) in einer mit dem Ventilstößel (43) fluchtenden Durchgangsbohrung (32) einer am Verbrennungsmotor arretierbaren Halterung (30) axial verschiebbar geführt ist.

12. Vorrichtung nach mindestens einem der Ansprüche 5 bis 7, 10 und 11, **dadurch gekennzeichnet**, daß der Schaft ein Widerlager (26) für ein Werkzeug (34) aufweist, wobei das Werkzeug (34) an einem an der Halterung (30) vorgesehenen Widerlager (33) angreift.
